Europäisches Patentamt

European Patent Office

Office européen des brevets

(11) Publication number: 0 358 079
A2

## EUROPEAN PATENT APPLICATION

(21) Application number: 89115865.1

(22) Date of filing: 29.08.89

(51) Int. Cl.⁵: C08G 18/58 , C08G 18/69 , C09J 175/00 , C09J 163/00 , B32B 7/12

(30) Priority: 09.09.88 US 242389

(43) Date of publication of application:
14.03.90 Bulletin 90/11

(84) Designated Contracting States:
DE ES FR GB IT

(71) Applicant: BRIDGESTONE/ FIRESTONE, INC.
1200 Firestone Parkway
Akron, OH 44317(US)

(72) Inventor: Lawson, David F.
11621 Garden Lane, NW
Uniontown Ohio 44685(US)
Inventor: Roland, Charles M.
324 Eutaw Forest Drive
Waldorf Maryland 20601(US)
Inventor: Hausch, Walter R.
327 Caladonia Avenue
Akron Ohio 44313(US)
Inventor: Koch, Russell W.
2135 Howard Street
Hartville Ohio 44632(US)

(74) Representative: Kraus, Walter, Dr. et al
Patentanwälte Kraus, Weisert & Partner
Thomas-Wimmer-Ring 15
D-8000 München 22(DE)

(54) An adhesive system for bonding uncured rubber to cured polyurethane.

(57) An adhesive system for bonding an uncured rubber to a cured polyurethane comprises a nitroso type crosslinking agent, a polyisocyanate crosslinking agent, a wetting agent such as an epoxy resin which is capable of wetting the polyurethane, and optionally a solvent. A tackifier can optionally be contained in the above adhesive system to improve tack in situations where such is desired. The adhesive system can be utilized in specific situations such as to adhere a steel bead, as in a tire, which is encapsulated in polyurethane, with a tire sidewall, to adhere an uncured rubber tread to a urethane tire, to adhere a tread or repair patch over sections of a cured polyurethane, and the like.

# AN ADHESIVE SYSTEM FOR BONDING UNCURED RUBBER TO CURED POLYURETHANE

## FIELD OF THE INVENTION

The present invention relates to an adhesive system for bonding a cured polyurethane to an uncured rubber, and to the resulting composite.

## BACKGROUND OF THE INVENTION

Heretofore, it was generally known to adhere or glue a cured urethane to a cured rubber compound. The use or application of a liquid urethane, that is an uncured urethane to a cured or revulcanized rubber was also known. However, it is generally not known to adhere an uncured rubber to a cured polyurethane.

U.S. Patent No. 2,702,773 to Penn relates to bonding a rubber material to a transparent polymeric material having active hydrogen containing groups by applying a polyisocyanate type compounds between the two materials before the rubber is vulcanized.

U.S. Patent No. 2,837,458 to Coleman relates to bonding rubber to a non-metal substrate utilizing an adhesive system containing an organic isocyanate and a dithiocarbimic acid..

U.S. Patent No. 3,264,249 to Araki et al relates to adhesive compositions utilized in medical applications containing mixtures of a compound which has a polymerizable double bond and a cyano group joining the carbon atom forming the double bond, a diene type polymer, and a polyisocyanate compound.

U.S. Patent No. 3,264,269 to Rees et al relates to a process for crosslinking polymers containing carboxyl groups comprising reacting a diisocyanate with said polymer.

U.S. Patent No. 3,528,848 to Zoebelein relates to a rubber article containing a hydroxylated butadiene polymer having a cured polyurethane lacquer coating.

U.S. Patent No. 3,595,826 to Conard relates to preparing adhesives by adding dichlorobutadiene to acrylonitrile or methacrylonitrile under polymerization conditions.

U.S. Patent No. 3,645,980 to Baker et al relates to reacting rubber with a nitrosophenol or nitrosoamine and reacting the pendant amino or hydroxyl group in the resulting product with an isocyanate.

U.S. Patent No. 3,648,748 to Lovell relates to a cured rubber tire having adhered thereto a laminate of a cured polyurethane composite produced by coating the tire with an adhesive, cured polyurethane which is prepared by reacting an organic polyisocyanate with a reactive hydrogen-containing polymeric material.

U.S. Patent No. 3,817,918 to Aufdermarsh relates to an elastomer-polyester composition which is adhered together through the utilization of a terpolymer of a polyisocyanate, polyhydroxyphenol, and an epoxy resin.

U.S. Patent No. 3,832,274 to Owston relates to adhesives made from butadiene, an acrylic monomer, methacrylic acid, and the reducing component of a Redox polymerization catalyst.

U.S. Patent No. 3,832,275 to Matvey et al relates to a composite of a vulcanized diene rubber with a low vapor transmission layer having a polyurethane outer layer suitable for use in making containers. The low vapor transmission layer can be butyl rubber.

U.S. Patent No. 3,882,089 to Baker et al relates to the vulcanization of rubber utilizing a compound which upon heating is thought to decompose into various components including a nitroso compound, a diisocyanate, and the like.

U.S. Patent No. 3,916,072 to Hausch et al relates to adhesive compounds containing aliphatic nitro compounds.

U.S. Patent No. 3,917,554 to Inoue et al relates to a nitrile rubber solution type adhesive containing a butadiene-acrylonitrile alternating copolymer.

U.S. Patent No. 3,991,255 to Blaskiewicz et al relates to the adhesion of polyurethane to an EPDM surface by chemically modifying the EPDM by mixing it with a halogen donating material.

U.S. Patent No. 4,136,219 to Odam et al relates to adhering a urethane paint to a vulcanized rubber surface wherein the rubber surface contains a halogenated butyl rubber.

U.S. Patent No. 4,311,181 to Hausch relates to applying an uncured urethane to a cured elastomer substrate utilizing an amine curable polymer or prepolymer such as a urethane polymer or prepolymer and a treating agent such as N-halohydantoin, a N-haloamide, or a N-haloimide.

U.S. Patent No. 4,535,121 to Ozelli relates to an adhesive for flocking elastomers containing an isocyanate-terminated polyurethane prepolymer and an adhesion promoter which is the reaction product of an aromatic diisocyanate with a polyfunctional epoxide. Optionally, nitroso compounds can also be utilized.

U.S. Patent No. 4,581,425 to Hefner relates to a thermosetting composition containing an alkenyl phenyl cyanate and at least one of an aromatic polycyanate, a polymaleimide, or a polymerizable ethylenically unsaturated aromatic monomer.

Swedish Patent 0648593 to Kamensvii relates to coating one surface of a cured rubber with an oligodiene-diisocyanate and remaining rubber surface with an aromatic diamine, combining with two surfaces and permitting crosslinking to take place.

Japanese Patent 136363 to Mitsubishi relates to a rubber layer, fiber layer composite, having therebetween a polyisocyanate and a hydrocarbon polymer.

Japanese Patent 0085941 to Ichi-kaku relates to a rubber polyurethane laminate containing a polyisocyanate and dimethylformamide.

Patent DL 0227388 to Schwarzheide relates to a process for bonding rubber to a foam urethane elastomer by coating the rubber with an elastic polyurethane sealant composition and pouring a urethane mixture onto the incompletely reacted coating.

Japanese Patent 0179251 to Gosei relates to an endless ethylene-propylene rubber composite bonded with an intermediate urethane segment.

Japanese Patent 0083031 to Beslon relates to a prepreg containing an epoxy resin, a reaction product of a liquid butadiene-acrylonitrile copolymer, and an epoxy resin, a diaminodiphenylsulphon, and a dicyandiamide.

Japanese Patent 0083032 to Beslon relates to an epoxy prepreg resin containing a novolak type epoxy resin, an epoxy resin containing at least one N,N-diglycidylamino group; a reaction product of (C-1) a liquid butadiene-acrylonitrile copolymer containing carboxyl groups at both ends and (C-2) an epoxy resin; 4,4'-diaminodiphenylsulphone; and dicyandiamide and a curing accelerator.

International Patent 84/00552 to the Boots Co. relates to a modified thermosetting imide resin having a formulation as set forth therein.

Soviet Patent No. 0648593 relates to adhering vulcanized rubber surfaces utililzing an isodienediisocyanate and an aromatic diamine.

## SUMMARY OF THE INVENTION

The adhesive system of the present invention which bonds cured urethane substrates to uncured rubber substrates contains various components including an epoxy compound which is capable of wetting the polyurethane surface so that good adhesion thereto is obtained. Halogenated epoxies are desired. Two different types of crosslinking compounds are generally utilized, a nitroso type and a polyisocyanate type. The nitroso type is desirably inert and in the form of a powder. Upon heating, the powder will melt and generally reacts with the rubber while it cures. Generally any polyisocyanate crosslinking agent can be utilized, with diisocyanates being desired and aromatic diisocyanates being preferred. The diisocyanate generally reacts with the urethane substrate or surface. In order to dissolve the polyisocyanate crosslinking agent and/or the epoxy resin and to form a dispersion of the various nitroso crosslinking agents, a solvent is utilized. If improved tack is desired, a tackifier such as a low molecular weight elastomer can be utilized. The adhesive system, as noted, is especially suitable in bonding uncured rubber to a cured polyurethane so that upon heating the adhesive system during the rubber curing process, it chemically reacts with both the rubber and the cured polyurethane.

## DETAILED DESCRIPTION OF THE INVENTION

The urethane substrate or surface which is bonded or adhered to an uncured rubber surface can gener ally be any conventional urethane as well as those known to the art and to the literature. For example, the polyurethane can be made from a polyether polyol or a polyester polyol which is usually reacted with a slight equivalent excess, e.g. from about 0.25 percent to about 5 percent by weight, of a polyisocyanate to form a prepolymer having terminal isocyanate groups. Generally, any type of polyisocyanate can be utilized such as those having the formula $R(NCO)_n$ where R is an aliphatic, preferably an alkyl group, an aromatic, or an aliphatic substituted aromatic such as an alkyl substituted aromatic having from 4 to 25 carbon atoms,

3

and preferably from 8 to 18 carbon atoms. The number of isocyanate groups, that is n, can be 2, 3 or 4, but preferably is 2. Examples of specific isooyanates are well known to the art and to the literature. Preferred isocyanates include toluene diisocyanate, "MDI," that is 4,4'-methylene bis(phenylisocyanate), the various isomers of isophorone diisocyanate, and hydrogenated MDI. By way of example, but not intending to be limited thereby, examples of specific types of polyurethanes which can be utilized are those as set forth in U.S. Patent Nos. 2,620,516; 2,777,831; 2,843,568; 2,866,774; 2,900,368; 2,929,800; 2,948,691; 2,948,707; 3,114,735; and the like which are hereby fully incorporated by reference. Examples of specific types of commercially available polyurethanes include Adiprene L-367, a polytetramethylene ether glycol containing approximately 6.4 percent isocyanate end groups by weight, manufactured by Uniroyal Chemical Co.; Adiprene L-42, a polytetramethylene ether glycol containing approximately 2.8 percent isocyanate end groups by weight, manufactured by Uniroyal Chemical Co.; and Cyanaprene A-7, a polyester-based coating polymer with approximately 2.4 percent isocyanate end groups by weight, manufactured by American Cyanamid. Blends of various polyurethanes can also be utilized.

Various curing agents or chain extenders can be utilized such as polyol type curing agents and preferably amine type curing agents. Specific examples of suitable polyol curing agents include the various diols and triols containing from 2 to about 8 carbon atoms with from 3 to about 6 carbon atoms being preferred such as 1,4-butane diol, 1,3-propanediol, glycerine, trimethylol propane, and the like. Various polyamine curing agents can also be utilized, with diamines being preferred. Such amine curing agents have from 2 to about 1,000 carbon atoms with specific examples including ethylenediamine, the various phenylenediamines, amine-terminated polyols, and the like. However, the following curing agents are generally preferred: MOCA, that is 4,4'-methylene bis(2-chloroaniline); or, desirably a complex of 4,4'-methylene dianiline and a salt, or a complex of racemic 2,3-di(4-aminophenyl) butane and a salt, as set forth in U.S. Patent No. 3,755,261 to VanGulick which is hereby fully incorporated by reference. The latter two complexes are preferred. The methods for preparing the complexes are set forth in U.S. Patent No. 3,755,261. A preferred salt utilized with the 4,4'-methylene dianiline compound is sodium chloride or lithium chloride. Due generally to availability and costs, the complexes or salts derived from 4,4'-methylene dianiline are highly preferred. Another class of amine curing agents which can be utilized are the various Versamides, that is the condensation products of polyamines and dibasic acids obtained when certain unsaturated fatty acids are polymerized, and are manufactured by Henkel Chemical Company.

The equivalents of the curing agent utilized with regard to the curable prepolymer or polymer, including the amine curing agent, generally ranges from about 85 percent to 115 percent with from about 95 to 105 percent being preferred.

Often to facilitate processing, the curing agent, and especially an amine curing agent such as the complex of 4,4'-methylene dianiline and a salt is utilized with a plasticizer such as dioctylphthalate in any suitable amount such as approximately a 50 percent weight basis, or Flexol 4-GO, tetraethylene glycol bis-(2-ethyl hexanoate) manufactured by Union Carbide Corporation such as approximately a 50 percent weight basis. The amount of the plasticizer can range from about 20 percent to about 60 weight percent.

Often, a polar solvent can be utilized with the above curing agents as when it is a solid to form a dispersion thereof. Such polar solvents are set forth in U.S. Patent No. 3,888,831 to Kogon which is hereby fully incorporated by references. Specific examples of suitable solvents include dimethylformamide, tetrahydrofuran, cyclohexanone, ethyl acetate, nitromethane, nitroethane, nitropropane, and methyl ethyl ketone are highly preferred. The use of acetone may be desirable to effect cure of the urethane when the MDA-salt complex is used.

The rubber substrate or surface of the present invention is an uncured elastomer which is made from various elastomer-forming monomers. One such class of monomers are the various conjugated dienes having from 4 to 12 carbon atoms. Specific examples of diene monomers include butadiene, isoprene, pentadiene, hexadiene, heptadiene, octadiene, 2,3-di-methyl-1,3-butadiene, 2-methyl-1,3-pentadiene, and the like. Preferred polydiene elastomers are made from monomers of butadiene and/or isoprene. Moreover, natural rubber can be utilized. By the term "natural rubber," it is meant the elastomeric substance obtained from various trees and plants which generally grow in the tropics or desert portions of the world. Such material contains a very high content (in excess of 90 percent and often in excess of 95 percent) of cis-1,4-polyisoprene. Also included within the class of conjugated dienes are the various copolymers and interpolymers thereof, e.g., poly(butadiene-isoprene), including the various diblock copolymers, triblock copolymers, e.g., poly(styrene-butadiene-styrene), and the like.

Another class of useful elastomers are the various copolymers made from monomers of conjugated dienes having from 4 to 12 carbon atoms as set forth above and vinyl substituted aromatic compounds containing from 8 to 15 carbon atoms. Examples of specific vinyl substituted aromatic compounds include styrene, alphamethylstyrene, 4-t-butylstyrene, vinyl toluene, divinyl benzene, isopropenyl benzene, diisopropenyl benzene, and the like, with styrene being preferred. Examples of specific copolymers thus include poly(styrene-butadiene) (SBR), poly(alpha-methyl-styrene-butadiene), and poly(4-t-butylstyrene-butadiene). A preferred copolymer is a poly(styrene-butadiene).

Although the following rubber compounds can be utilized, they are not as desired as the above elastomer-forming monomers. Thus, butyl rubbers can be utilized which are copolymers of isobutylene and a small amount of isoprene. Neoprene, that is polychloroprene (2-chloro-1,3-butadiene), can also be utilized. Still another class of elastomer rubbers are the nitrile rubbers, that is copolymers made from dienes as set forth above having from 4 to 12 carbon atoms with acrylonitrile monomers. Usually, the ratio of the two monomers in nitrile rubber is similar to the ratio of butadiene to styrene in styrene-butadiene rubber.

Blends of the above said rubbers can also be used. The above elastomers can be prepared according to conventional methods known to those skilled in the art as well as to the literature.

While the above description with regard to various polyurethanes and uncured elastomers or rubbers has been set forth, it is to be understood that this patent is not limited solely thereto, in that the invention generally pertains to any conventional cured polyurethane and uncured rubber substrate as well as to such compounds which are known to the art and to the literature.

The adhesive system of the present invention utilized to form the composite or lamina comprises a nitroso type crosslinking agent, an isocyanate type crosslinking agent, a wetting agent such as an epoxy resin, and desirably solvents to dissolve or disperse the various crosslinking agents. The various nitroso type crosslinking agents are generally solids and in the form of a fine powder. Upon heating, the powder melts and becomes very reactive and generally reacts with the uncured rubber substrate through the unreacted double bonds thereof. However, the nitroso can also react with the isocyanate type crosslinking agent. Specific classes or types of nitroso crosslinking agents include nitrosobenzenes, dinitrosobenzenes, nitrosophenols, the various isomers of nitrosonaphthols, nitrosoanilines, nitrosomono and dialkylanilines and the various nitrosoalkanes wherein the alkyl portion has from 1 to 26 carbon atoms and preferably from 2 to 12 carbon atoms. Examples of specific nitroso compounds include nitrosobenzene, nitrosoaniline, o-, m-, p-nitrosophenol, nitrosonaphthol and dinitrosobenzene, with meta-, and para-dinitrosobenzene being preferred. The amount of the various nitroso type crosslinking agents utilized is generally from about 10 parts by weight to about 190 parts by weight and preferably from about 80 parts by weight to about 125 parts by weight per 100 parts by weight of the wetting agent such as an epoxy compound. Inasmuch as the nitroso compounds are generally solids, they are added to the adhesive system as a dispersion and hence are contained in a suitable solvent dispersion medium as set forth hereinbelow.

The isocyanate type crosslinking agent of the adhesive system is a crosslinking agent which is compatible with the cured urethane polymer. Although the reaction mechanism of the present invention is not fully understood, it is thought that whereas the nitroso crosslinking agent generally reacts with the rubber compound, the isocyanate-type crosslinking agent generally reacts with the urethane polymer, although the two crosslinking agents can react with each other or with the remaining substrate. Generally any type of polyisocyanate can be utilized although the aromatics are desired in that they are more stable. The various types of polyurethane crosslinking agents which can be utilized are represented by the formula $R(NCO)_n$ wherein n equals 2, 3, or 4 with 2 being preferred. R can be an aliphatic, desirably an alkylene having from 4 to 20 carbon atoms and desirably from 6 to 15 carbon atoms. R can also be an aromatic, and preferably an alkyl substituted aromatic having from 6 to 25 carbon atoms and desirably from 7 to 15 carbon atoms. Examples of specific suitable urethane or isocyanate type crosslinking agents include toluene diisocyanate, isophorone diisocyanate, hexamethylene diisocyanate, with methylene-bis-(phenylisocyanate) being preferred. The amount of the urethane type crosslinking agent is from about 25 parts by weight to about 190 parts by weight and preferably from about 50 parts to about 150 parts by weight per 100 parts by weight of the wetting agent.

The adhesive system utilizes a wetting agent to generally wet the cured polyurethane substrate so that more intimate contact and better adhesion thereto can be obtained. Desired types of wetting agents are the various epoxy resins. As known to the art and to the literature, epoxy resins are generally the reaction products of a bisphenol and epichlorohydrin which result in the diglycidyl ether of the bisphenol and higher homologs. Other conventional epoxy resins include various epoxy novolac resins, various halogenated epoxy resins and various polyglycol epoxy resins. Such epoxies are well known to the art and to the literature, as for example as set forth in the Kirt-Othmer Technical Encyclopedia, 3rd Edition, Volume 9, pages 267-278, 1980, John Wiley & Sons, Publishers; in General Guide Formulating with Dow Epoxy Resin, a 52 page pamphlet published by the Dow Chemical Company, Form No. 296-346-188, and in General Guide Bromanated Epoxy Resins and Solutions, a 4 page brochure published by the Dow Chemical Company, Form No. 296-387-88R, hereby fully incorporated by reference.

According to the concepts of the present invention, generally halogenated epoxies are utilized since they are better wetting agents with chlorine being desirable and the bromine derivatives being preferred. The epoxy or halogen epoxy resins of the present invention generally have a molecular weight of from about 300 to about 5,000 with from about 400 to about 2,000 being preferred. When halogenated, the amount of halogenation is from about 5 percent to about 60 percent by weight with from about 15 percent to about 25 percent by weight of halogen being preferred based upon the total weight of the epoxy resin. Specific examples of epoxy wetting agents include glycidyl, etc., ethers of mono-, di-, tri-, or tetrachlorobisphenol A, mono-, di-, tri-, or tetrabromobisphenol A, oligomeric copolymers of bisphenol A (etc.) and glycerine, with the glycidyl ethers of tetrachloro- and tetrabromobisphenol A being preferred.

In order that the adhesive system can be readily applied to the uncured rubber substrate and to the cured polyurethane substrate, a solvent is desirably utilized. Desirable types of solvents are those which are generally compatible, that is solvents which dissolve the isocyanate crosslinking agent and the epoxy resin and generally disperse the nitroso type crosslinking agent, without reacting with the other components. Such solvents are generally aprotic and do not have high boiling points, that is generally have a boiling point of 150°C or less and preferably 135°C or less. Aromatic hydrocarbon solvents and aliphatic (alkyl desired) substituted aromatic solvents are preferred such as those having from 6 to 12 carbon atoms, with from 6 to 9 carbon atoms being preferred. Examples of specific aromatic solvents include benzene, xylene, toluene, ethylbenzene, indene, anisole, mixtures thereof, and the like. Various aliphatic solvents can also be utilized having from about 5 to about 15 carbon atoms, with the various alkanes having from 6 to 9 carbon atoms being desired. Typically, the hexanes, heptanes, isooctanes, and isononanes, and mixtures thereof are desired. Various ketones having from 3 to 10 carbon atoms can also be utilized such as acetone and methyl ethyl ketone. Various esters having a total of from 2 to 15 carbon atoms can be utilized such as ethylacetate, butyl acetate, methyl butylrate, and the like. Another class of aprotic solvents are the various ethers and polyethers, that is ethers which have two or more ether linkages therein, having from 2 to 10 carbon atoms such as diethyl ether, ethylene glycol dimethyl ether, ethylene glycol diethyl ether, diethylene glycol dimethyl ether, and the like. Effective amounts of solvents are utilized to dissolve and to disperse the various ingredients thereof. Generally, the amount of the solvents can vary widely as from about 10 parts to about 1000 parts by weight and desirably from about 200 parts to about 600 parts by weight for every 100 parts by weight of the wetting agent.

The adhesive system can be prepared according to any general method by mixing the various components together either simultaneously or in any order provided that generally the isocyanate crosslinking agent is usually added last. Although the mixture containing the isocyanate crosslinking agent therein is often stable for a period up to several days and desirably in excess of a few hours, the isocyanate crosslinking agent is generally expeditiously added just prior to the application of the adhesive system to the various substrates. The adhesive system of the present invention can be added to the cured polyurethane substrate, to the uncured rubber substrate, or to both substrates, in any conventional manner as by brushing, coating, spraying, dipping, and the like. Several coats can be applied. The surface of the polyurethane substrate should be generally free of contamination. This can be accomplished by rubbing or brushing the surface thereof with a solvent such as tetrahydrofuran, acetone, methyl ethyl ketone, and the like. The surface of the rubber substrate can also be cleaned in a conventional manner such as by solvent wipe, solvent degreasing, and the like. The surfaces are allowed to dry thoroughly before and after applying the adhesive. The dried substrate surfaces containing the adhesive system of the present invention on either the rubber substrate surface, the urethane substrate surface, or both, are then brought together in contact with each other and subsequently cured. Heat is usually applied to increase the cure rate. Inasmuch as the urethanes can revert, or depolymerize, at high temperatures, the upper curing temperature range is generally 175°C or less. Curing generally occurs at temperatures of from about 125° to about 175°C and preferably from about 145° to about 170°C. Pressure can optionally be utilized with suitable pressure ranges being from about 50 to about 10,000 psi and preferably from about 100 to about 5,000 psi. Cure desirably occurs in situ.

The adhesive system of the present invention, as noted above, can be utilized in any application wherein it is desirable to bond or adhere a cured polyurethane to an uncured rubber, which is cured during the process of bonding. A composite or laminate of the rubber, the adhesive, and the urethane is thus formed. Specific examples include the adhesion of a cured urethane tire core and/or belt to an uncured rubber carcass, and/or tread, the adhesion of an uncured rubber tread to a cured polyurethane tire carcass, the adhesion of a cured urethane repair plug to an uncured rubber substrate, the fabrication of mechanical goods based on rubber/urethane laminates of this type, the bonding of polyurethane encapsulated metal components to tires and rubber mechanical goods, and the like. The uncured rubber substrate is generally and simultaneously cured with the adhesive.

Whenever it is desired that a tacky adhesive system be utilized, the adhesive system contains a tackifier therein. Applications wherein tacky adhesive systems are desired include applying a bead filler to a tire carcass, assembly of tire components, assembly of multicomponent mechanical goods, and the like. The tackifier is desirably an isocyanate terminated, low molecular weight polymer made from diene or monoolefin monomers. If the tackifier is made from monoolefins, the number of carbon atoms is from about 2 to about 12, with isobutylene being preferred. When the low molecular weight tackifier is made from dienes, any diene having from 4 to 8 carbon atoms can be utilized, with butadiene being preferred. By low molecular weight, it is meant that the tackifier has a molecular weight of from about 600 to about 30,000 and preferably from about 1,000 to about 10,000.

The diisocyanates utilized to endcap the low molecular weight polymer generally have the formula R-$(NCO)_n$ where n is preferably 2 although small amounts of polyisocyanates can be utilized wherein n is 3 or 4. R is generally an aliphatic or preferably an alkyl having from 4 to 20 carbon atoms, with from 6 to 15 carbon atoms being preferred. Aromatic or aliphatic substituted aromatics or desirably alkyl substituted aromatics can also be utilized containing a total of from about 6 to about 25 carbon atoms, with from about 7 to about 15 carbon atoms being preferred. Specific types of suitable diisocyanates which can be utilized include the same compounds set forth hereinabove. Generally, toluene diisocyanate, isophorone, and MDI are preferred. The amount of tackifier utilized in the adhesive system is from about 5 to about 100 parts by weight and preferably from about 10 parts to about 35 parts by weight for every 100 parts by weight of the epoxy resin.

The present invention will be better understood by reference to the following examples.

## EXAMPLE I

The following is an example of the formulation application and adhesive properties of an adhesive system, mixed in the following order:

| CEMENT RECIPE | WEIGHT (grams) |
|---|---|
| DER 511, a glycidyl diether of tetrabromobisphenol A (a Product of Dow Chemical Co.) | 25.0 |
| Toluene | 62.5 |
| Dinitrosobenzene dispersion (37%) in Toluene (W/W) | 50.0 (18.5) |
| 50% MDI in toluene (W/W) | 39.4 (19.7) |

The mixture, shaken in a bottle, was brushed with a 1" brush (immediately after mixing the MDI) onto a 5" x 6" poly(urea-urethane) pad, with fabric backing, which had been cleaned by rubbing with tetrahydrofuran and allowed to dry in air. Pads with both "heavy" (i.e., multiple coatings painted thereon) and "light" (i.e. a single coating layer) applications were prepared. Only enough of the mixture was applied as to give adequate surface coverage (i.e., the entire amount of mixture was not used). Upon drying in air, the pads were contacted with uncured rubber and cured together at 150°C for 35 minutes under pressure (10 tons, 5 inch diameter ram) in a compression mold. Peel adhesion tests (180 degrees) were run on 1 inch wide strips cut from the samples (test run at room temperature, 2.0 in/min crosshead speed).

| TEST RESULTS (2 in/min peel rate) | | | | |
|---|---|---|---|---|
| | Peel Force, pli @ Temp : | | | |
| Sample | RT | 100°C | 80°C | 120°C |
| A (heavy dose) | 64 ± 11 (rubber tear) | 30 ± 8 (rubber tear) | - | - |
| B (light dose) | 52 ± 5 (rubber tear) | ca.1 (clean interfacial) | - | - |
| C (heavy dose) | 60 (rubber tear) | - | - | - |
| D (heavy dose) humid aged | 90 (tear to backing) | 20 | 30 | 6 |

The results may be compared with those for composite without adhesive treatment, in which peel

7

strengths of 0-5 pli are found at room temperature, with clean interfacial failures. They show that multiple coats, i.e., four to five coats, of adhesive cement give higher peel strengths than one coat, and that the adhesive strength of the composite is not significantly affected by humid aging.

Example II exemplifies the use of varying levels of TDI and with a different rubber.

| EXAMPLE II | | | |
|---|---|---|---|
| | A | B | C |
| DER 511 | 23.5 | 23.5 | 23.5 |
| Toluene | 70.6 | 70.6 | 70.6 |
| p-dinitrosobenzene | 5.9 | | |
| Toluene diisocyanate | 11.8 | 9.4 | 14.1 |
| Peel adhesion to "APG" rubber (lb/linear in.) | 21 | 18 | 23 |
| APG - all purpose gum | | | |

Example II indicates that the amount of isocyanate crosslinking utilized for the range set forth can be varied with minor accompanying changes in peel strength.

EXAMPLE III

Adhesion with Epoxy-DMB-Isocyanate Systems

The following general procedure was employed in the following examples:

A polyurea-urethane pad reinforced with Kevlar fibers (nominal thickness: 0.1 in., 6" x 5") was rubbed with acetone, then tetrahydrofuran, using a lint-free cheesecloth. After allowing the pad to dry by standing at room temperature, the adhesive was applied as indicated in the specific example. Usually, this involved brushing the adhesive on with a 1" paint brush, and allowing it to dry in air. Then a fresh, natural rubber tie gum was optionally spread across the surface, and additional adhesive or a different adhesive may be applied without touching the surfaces with the fingers (the tie gum is ca 0.05-0.075 in thick, and is supplied in a roll with a polyethylene sheet separating layers). A calendered, cord-reinforced, uncured, cushion stock, which had been rubbed with toluene to freshen the surface and allowed to dry, was placed against this. The resulting composite pads were knitted by rolling with a steel roller to remove all obvious air bubbles, and were cured at 300° F to 320° F for 30-40 minutes under about two tons of pressure (5" ram) in a positive pressure mold.

The indicated ingredients were applied as specified in Table I. Order of application to polyurethane surface is given in parentheses.

EP 0 358 079 A2

## TABLE I

|  | A (Control) | B | C | D |
|---|---|---|---|---|
| Sup-R-Tac[a] | 2 coats (1) | 2 coats (2) | None | None |
| 5% PBdOH/TDI Prepolymer[b] | None | None | None | 1 coat (1) |
| Adhesive Cement[c] | None | 2 coats (1) | 2 coats (1) | 2 coats (2) |
| NR tie gum[d] | (2) | (3) | None | (3) |
| Cushion stock[e] | (3) | (4) | (2) | (4) |

All cured: 35 min. @ 300°F, @ 2 tons positive pressure mold

Test Results:

|  | A | B | C | D |
|---|---|---|---|---|
| Peel Strength(pli) @ 24°C | 0.4, 0.6 | 21.5, 22.9 | 28.7, 29.3 | 50.1, 68.5 |
| Mode of Failure @ 24°C | IF[f] | Mixed IF, CF[g]Sup-R-Tac | CF rubber (to backing) | CF rubber, jagged tear |
| Peel Strength (pli) @100°C | 0.1 | 21.6 | 27.6 | 59.3 |

## TABLE I (continued)

| A | B | C | D |
|---|---|---|---|
| Mode of failure @100°C | | | |
| IF | Mixed IF/CF in Sup-R-Tac layer | CF rubber (to backing) | CF rubber, jagged tear |

a Sup-R-Tac - retread adhesive

b Reaction product of hydroxy-terminated PBd with toluene diisocyanate, 5% toluene

c Recipe: 20 g. of 50% MDI in toluene plus 21.5 g of a mixture of 100.0 g Dow DER 511A, 125 g dry toluene, 200 g of a 37.5% dispersion of p-DNB in xylene

d Contains natural rubber

e Contains SBR, Natural rubber, carbon black, standard cure additives and standard compounding ingredients

IF = interfacial failure

CF = cohesive failure

Table I clearly shows the superiority of the present invention over a standard adhesive cement used in retreading, for the purpose of bonding urethane to rubber per the instant invention. It further demonstrates the potential utility of the PBd-diol diisocyanate polymer as a component of the adhesive. As apparent from Table I, a dramatic improvement in adhesive strength was obtained when an adhesive cement of the present invention was utilized. For example, an increase in peel strength of at least 35 times was achieved over the control which utilized a very good heretofore conventional adhesive, that is "SUP-R-TAC".

Table II relates to a comparison of the adhesive cement on the present invention with regard to a commercially available elastomer adhesive, i.e. Chemlock.

Tables II and III show comparative results with a Chemlock type adhesive.

## TABLE II

(order of application in parentheses)

| | A | B | C | D | E | F | G |
|---|---|---|---|---|---|---|---|
| Chemlok 210[a] (1 coat/dry 2 hrs R.T.) | (1) | (1) | (1) | (1) | None | None | None |
| Chemlok 233[a] (1 coat dry 1 hr. R.T.) | None | (2) | (2) | None | None | None | None |
| Chemlok 205[a] (1 coat/dry 1 hr. R.T.) | None | None | (3) | (2) | None | None | None |
| Epoxy/DNB/MDI Adhesive cement per Example VII-B-D (1 coat/dry 20 min. 2nd coat/dry 1 hr. @ R.T.) | None | None | None | None | (1) | None | (1) |
| Adhesive Cement[b] Mixture (see below) (1 coat/dry 20 min. 2nd coat/dry 1 hr @ R.T.) | None | None | None | None | None | (1) | None |
| NRTie Gum (2 layers)[d] | (2) | (3) | (4) | (3) | (2) | (2) | (2) |
| Calendered cushion stock[e] | (3) | (4) | (5) | (4) | (3) | (3) | (3) |

11

## TABLE II (continued)

[a]Products of Lord Chem. Corp. used as adhesives for elastomer bonding.

[b]Mixture: contains 82.0 g of 50% MDI in toluene and10.00 g of TDI-terminated polybutadiene diol prepolymer XMC-100, Product of Arco Chemicals + 200 g of a mixture of 100 g Dow DER 511A, 125 g dry toluene, 200 g of a 37.5% dispersion of p-dinitrosobenzene in xylene.

[d]See Table I

[e]See Table I

[e]cure conditions: 320°F for 40 min.  5 tons pressure with 3" ram, positive pressure mold

[f]Adhesive components were aged 6 months before using.

EP 0 358 079 A2

TABLE III

| Adhesion Test Results | | | |
|---|---|---|---|
| | T-Peel Force (pli) | | |
| Sample | 24° C | 100° C | Comments |
| A | 1.5, 2.5 | 1.0 | IF[a] |
| B | 96.0, 142.0 | 2.5 | CF[b]/chunky rubber tear |
| C | 46.0, 40.0 | 7.0 | - |
| D | 5.0, 5.0 | 2.0 | Adhesive/rubber failure |
| E | 120.0, 110.0 | >100 | Mixed CF/IF |
| F | 110.0, >100 | >100 | CF/chunky rubber tear |
| G | 87, 107 | 56 | Pulled to backing CF/chunky rubber tear |

[a]IF = interfacial failure
[b]CF = cohesive failure

The results of Table III showed the following:

Commercially-available adhesives used for elastomer bonding have limited utility in the instant application (i.e. for cured urethane to uncured rubber bonding or in situ curing of rubber). Although certain of these samples showed moderate-strong bonding at room temperatures (Samples B and C), the bonding deteriorated when tested at 100° C.

The adhesive of this invention, Examples E, F, and G, gave strong adhesive bonds both at room temperature and at elevated temperature. Further, the use of the diisocyanate-terminated polybutadiene prepolymer appears to make the adhesive bond more uniformly (i.e. gave uniform cohesive failures rather than mixed interfacial/cohesive failures). Moreover, this adhesive is now sticky to the touch, unlike the epoxy-DMB-isocyanate which forms a tack-free surface when dried. This stickiness is useful in holding parts together during assembly.

While in accordance with the Patent Statutes, the best mode and preferred embodiment have been set forth, the scope of the invention is not limited thereto, but rather by the scope of the attached claims.

## Claims

1. An adhesive system for adhering an uncured rubber substrate to a cured polyurethane substrate, comprising:
from about 100 parts by weight of a wetting agent capable of wetting the polyurethane substrate;
a nitroso crosslinking agent, the amount of said nitroso crosslinking agent being from about 10 to about 190 parts by weight per 100 parts by weight of said wetting agent;
a polyisocyanate crosslinking agent, the amount of said polyisocyanate crosslinking agent being from about 25 parts to about 190 parts by weight per 100 parts by weight of said wetting agent, and
optionally an effective amount of a solvent to compatibilize said wetting agent and said polyisocyanate crosslinking agent.

2. An adhesive system according to Claim 1, wherein said wetting agent is an epoxy resin or a halogenated epoxy resin, and wherein said effective amount of solvent disperses said nitroso crosslinking agent.

3. An adhesive system according to Claim 2, wherein said epoxy has a molecular weight of from 300 to about 5,000, wherein said halogenated epoxy contains from about 5 percent to about 60 percent by weight of a halogen based upon the total weight of said epoxy, wherein said nitroso crosslinking agent is a nitrosobenzene, a dinitrosobenzene, a nitrosophenol, a nitrosonaphthol, a nitrosoaniline, a nitrosoalkane having from 1 to 26 carbon atoms or a nitroso mono or a dialkylaniline wherein said alkyl portion has from 1 to 26 carbon atoms, or combinations thereof, wherein said polyisocyanate crosslinking agent has the formula $R(NCO)_n$ where n is 2, 3, or 4, and wherein R is an aliphatic having from 4 to 20 carbon atoms, an aromatic or an aliphatic substituted aromatic having from 6 to 25 carbon atoms.

4. An adhesive system according to Claim 3, wherein the amount of nitroso crosslinking agent is from about 80 to about 125 parts by weight per 100 parts by weight of said epoxy wetting agent, wherein the amount of said polyisocyanate crosslinking agent is from about 50 to about 150 parts by weight per 100 parts by weight of said epoxy wetting agent, and including said optional solvent, the amount of said optional solvent being from about 10 parts to about 1000 parts by weight per 100 parts by weight of said epoxy wetting agent.

5. An adhesive system according to Claim 4, wherein said epoxy resin is a halogenated epoxy resin having a molecular weight of from about 400 to about 2,000 wherein said halogenated epoxy contains from about 15 to about 25 percent by weight of a halogen based upon the total weight of said epoxy, wherein said nitroso crosslinking agent is a nitrosobenzene, a dinitrosobenzene, or combinations thereof, wherein R of said polyisocyanate crosslinking agent is an alkyl having from 6 to 15 carbon atoms, or an aromatic or an alkyl substituted aromatic having from 7 to 15 carbon atoms, and wherein n of said polyisocyanate crosslinking agent is approximately 2, wherein said solvent is an aprotic solvent.

6. An adhesive system according to Claim 5, wherein said epoxy is a glycidyl ether of tetrachloro bisphenol A or a glycidyl ether of tetrabromo bisphenol A, wherein said nitroso compound is meta-dinitrosobenzene or para-dinitrosobenzene, and wherein said polyisocyanate crosslinking agent is 4,4'-methylene bis(phenylisocyanate), and wherein the amount of said solvent is from about 200 to about 600 parts by weight per 100 parts by weight of said epoxy wetting agent.

7. An adhesive system according to Claim 1, including an effective amount of a low molecular weight tackifier to produce a tacky adhesive system, wherein the molecular weight of said tackifier is from about 600 to about 30,000, and wherein said tackifier is made from conjugated dienes having from 4 to 8 carbon atoms, a monoolefin having from 2 to 12 carbon atoms, or combinations thereof.

8. An adhesive system according to Claim 3, including an effective amount of a low molecular weight tackifier to produce a tacky adhesive system, wherein the molecular weight of said tackifier is from about 600 to about 30,000, and wherein said tackifier is made from conjugated dienes having from 4 to 8 carbon atoms, a monoolefin having from 2 to 12 carbon atoms, or combinations thereof, wherein the amount of said tackifying agent is from about 5 to about 100 parts by weight per 100 parts by weight of said epoxy resin, and wherein said tackifying agent is endcapped with a polyisocyanate, said polyisocyanate having the formula $R(NCO)_n$ where R is an aliphatic having from 4 to 20 carbon atoms, an aromatic or an aliphatic substituted aromatic having from 6 to 25 carbon atoms, and n is 2, 3 or 4.

9. An adhesive system according to Claim 4, including an effective amount of a low molecular weight tackifier to produce a tacky adhesive system, wherein the about 10,000, wherein said tackifier is made from butadiene, wherein the amount of said tackifying agent is from about 10 to about 35 parts by weight per 100 parts by weight of said epoxy resin, wherein said tackifying agent is endcapped with a polyisocyanate, said polyisocyanate having the formula $R(NCO)_n$, and where R of said polyisocyanate is an alkyl having from 6 to 15 carbon atoms, an aromatic or an aliphatic substituted aromatic having from 7 to 15 carbon atoms, and wherein n is 2.

10. An adhesive system according to Claim 6, including an effective amount of a low molecular weight tackifier to produce a tacky adhesive system, wherein the molecular weight of said tackifier is from about 1,000 to about 10,000, wherein said tackifier is made from butadiene, wherein the amount of said tackifying agent is from about 10 to about 35 parts by weight per 100 parts by weight of said epoxy wetting agent, wherein said tackifying agent is endcapped with a polyisocyanate, and wherein said polyisocyanate is MDI, toluene diisocyanate, or isophorone.

11. An adhesive system according to Claim 1, wherein said nitroso crosslinking agent is contained in the uncured rubber substrate.

12. An adhesive system according to Claim 3, wherein said nitroso crosslinking agent is contained in the uncured rubber substrate.

13. An adhesive system according to Claim 5, wherein said nitroso crosslinking agent is contained in the uncured rubber substrate.

14. An adhesive system according to Claim 8, wherein said nitroso crosslinking agent is contained in the uncured rubber substrate.

15. An adhesive system according to Claim 9, wherein said nitroso crosslinking agent is contained in the uncured rubber substrate.

16. An adhesive system according to Claim 10, wherein said nitroso crosslinking agent is contained in the uncured rubber substrate.

17. An adhesively bonded composite comprising:
a cured polyurethane substrate, a cured rubber substrate, the uncured state of which is bonded to said cured polyurethane substrate through an adhesive system, and said adhesive system, said adhesive system bonding said cured polyurethane substrate to said rubber substrate, said rubber substrate being cured during cure of said adhesive system.

14

18. An adhesively bonded composite according to Claim 17, wherein said adhesive system comprises: from about 100 parts by weight of a wetting agent capable of wetting the polyurethane substrate; a nitroso crosslinking agent, the amount of said nitroso crosslinking agent being from about 10 to about 190 parts by weight per 100 parts by weight of said wetting agent; a polyisocyanate crosslinking agent, the amount of said polyisocyanate crosslinking agent being from about 25 parts to about 190 parts by weight per 100 parts by weight of said wetting agent, and optionally an effective amount of a solvent to compatibilize said wetting agent and said polyisocyanate crosslinking agent.

19. An adhesively bonded composite according to Claim 18, wherein said wetting agent is a halogenated epoxy resin, wherein said epoxy has a molecular weight of from 300 to about 5,000, wherein said halogenated epoxy contains from about 5 percent to about 60 percent by weight of a halogen based upon the total weight of said epoxy, wherein said nitroso crosslinking agent is a nitrosobenzene, a dinitrosobenzene, a nitrosophenol, a nitrosonaphthol, a nitrosoaniline, a nitrosoalkane having from 1 to 26 carbon atoms or a nitroso mono or a dialkylaniline wherein said alkyl portion has from 1 to 36 carbon atoms, or combinations thereof, and wherein said polyisocyanate crosslinking agent has the formula $R(NCO)_n$ where n is 2, 3, or 4, and wherein R is an aliphatic having from 4 to 20 carbon atoms, an aromatic or an aliphatic substituted aromatic having from 6 to 25 carbon atoms, wherein said effective amount of solvent disperses said nitroso crosslinking agent.

20. An adhesively bonded composite according to Claim 19, wherein the amount of nitroso crosslinking agent is from about 80 to about 125 parts by weight per 100 parts by weight of said epoxy wetting agent, wherein the amount of said polyisocyanate crosslinking agent is from about 50 to about 150 parts by weight per 100 parts by weight of said epoxy wetting agent, including said optional solvent, the amount of said optional solvent being from about 10 parts to about 1000 parts by weight per 100 parts by weight of said epoxy wetting agent, wherein said halogenated epoxy has a molecular weight of from about 400 to about 2,000, wherein said halogenated epoxy contains from about 35 to about 25 percent by weight of a halogen based upon the total weight of said epoxy, wherein said nitroso crosslinking agent is a nitrosobenzene or a dinitrosobenzene, of combinations thereof, wherein R of said polyisocyanate crosslinking agent is an alkyl having from 6 to 15 carbon atoms, or an aromatic or an alkyl substituted aromatic having from 7 to 15 carbon atoms, wherein n of said polyisocyanate crosslinking agent is approximately 2, wherein said solvent is an aprotic solvent, and wherein the amount of said solvent is from about 200 to about 600 parts by weight per 100 parts by weight of said epoxy wetting agent.

21. An adhesively bonded composite according to Claim 20, wherein said epoxy is a glycidyl ether of tetrachloro bisphenol A or a glycidyl ether of tetrabromo bisphenol A, wherein said nitroso compound is metadinitrosobenzene or para-dinitrosobenzene, and wherein said polyisocyanate crosslinking agent is MDI, and wherein the amount of said solvent is from about 200 to about 600 parts by weight per 100 parts by weight of said epoxy wetting agent.

22. An adhesively bonded composite according to Claim 18, including an effective amount of a low molecular weight tackifier to produce a tacky adhesive system, wherein the molecular weight of said tackifier is from about 600 to about 30,000, and wherein said tackifier is made from conjugated dienes having from 4 to 8 carbon atoms, a monoolefin having from 2 to 12 carbon atoms, or combinations thereof, wherein the amount of said tackifying agent is from about 5 to about 100 parts by weight per 100 parts by weight of said epoxy resin, and wherein said tackifying agent is endcapped with a polyisocyanate, said polyisocyanate having the formula $R(NCO)_n$ where R is an aliphatic having from 4 to 20 carbon atoms, an aromatic or an aliphatic substituted aromatic having from 6 to 25 carbon atoms, and n is 2, 3 or 4.

23. An adhesively bonded composite according to Claim 19, including an effective amount of a low molecular weight tackifier to produce a tacky adhesive system, wherein the molecular weight of said tackifier is from about 1,000 to about 10,000, wherein said tackifier is made from butadiene, wherein the amount of said tackifying agent is from about 10 to about 35 parts by weight per 100 parts by weight of said epoxy resin, wherein said tackifying agent is endcapped with a polyisocyanate, said polyisocyanate having the formula $R(NCO)_n$, and where R of said polyisocyanate is an alkyl having from 6 to 15 carbon atoms, an aromatic or an aliphatic substituted aromatic having from 7 to 15 carbon atoms, and wherein n is 2.

24. An adhesively bonded composite according to Claim 20, including an effective amount of a low molecular weight tackifier to produce a tacky adhesive system, wherein the molecular weight of said tackifier is from about 1,000 to about 10,000, wherein said tackifier is made from butadiene, wherein the amount of said tackifying agent is from about 10 to about 35 parts by weight per 100 parts by weight of said epoxy wetting agent, wherein said tackifying agent is endcapped with a polyisocyanate, and wherein said polyisocyanate is MDI, toluene diisocyanate, or isophorone.